# EUROPÄISCHE PATENTSCHRIFT

(11) **EP 4 585 813 B1**
(45) Veröffentlichungstag und Bekanntmachung des Hinweises auf die Patenterteilung: **29.07.2026**
(21) Anmeldenummer: 24151664.0
(22) Anmeldetag: 12.01.2024
(51) Int. Cl.: F16B 15/06

(54) **HOLZNAGEL**
WOODEN NAIL
CLOU EN BOIS

(43) Veröffentlichungstag der Anmeldung: 16.07.2025
(73) Patentinhaber: BAUSSMANN Collated Fasteners GmbH, 57413 Finnentrop (DE)
(72) Erfinder: Baußmann, Winfried, 57413 Finnentrop (DE)
(74) Vertreter: Ostriga PartGmbB

(56) Entgegenhaltungen:
- EP-A1- 3 179 115
- GB-A- 1 072 609
- US-A- 364 439
- US-A1- 2017 298 974

## Beschreibung

Holznagel, bestehend aus einem Schaft und einem wenigstens an einem Ende angeordneten, sich verjüngenden Bereich, wobei der Durchmesser des Schaftes in Längsrichtung sich wiederholende Durchmesserveränderungen aufweist.

Die US364,439 A offenbart einen Befestiger aus Metall mit einer Mehrzahl an in den Schaft eingeformten konzentrisch angeordneten, widerhakenartigen Riffelungen. Diese sind als auf dem Kopf stehende Konusse ausgebildet.

Ein Holznagel ist beispielsweise aus der EP 4 027 026 A1 bekannt. In dieser Druckschrift ist ein Holznagel offenbart, der an seinem Schaft eine Vielzahl von Verankerungsstrukturen aufweist, die jeweils ein sich zur Nagelspitze konisch verjüngenden Strukturabschnitt aufweisen und einen sich rückseitig daran anschließenden Übergangsabschnitt, wobei die Verankerungsstrukturen einen gegenüber dem Schaftdurchmesser größeren Durchmesser aufweisen.

Derartige Holznägel erreichen hohe Auszugswerte, sofern die Mantelfläche des Holznagels ligninbasiert mit dem aufnehmenden Holzbauteil verschweißt wird, wobei die Eintreibgeschwindigkeit des Holznagels dabei mindestens 30 m/sec sein sollte.

In der Praxis hat sich herausgestellt, dass ein derartiger Holznagel nach dem Stand der Technik zum einen beim Eintreiben häufig in seiner Struktur und zum anderen die Holzmatrix des aufnehmenden Holzbauteils beschädigt wird.

Die Aufgabe der Erfindung besteht deshalb darin, einen Holznagel zu schaffen, der einerseits hohe Auszugswerte aufweist und andererseits beim Eintreiben nicht in seiner Struktur sowie auch nicht die umgehende Holzmatrix des aufnehmenden Holzbauteils beschädigt wird.

Die Lösung der Aufgabe ergibt sich durch einen Holznagel mit den Merkmalen des folgenden Anspruchs 1:
Holznagel, bestehend aus einem Schaft und einem wenigstens an einem Ende angeordneten, sich verjüngenden Bereich, wobei der Durchmesser des Schaftes in Längsrichtung sich wiederholende Durchmesserveränderungen aufweist, dadurch gekennzeichnet, dass der Schaft zumindest partiell eine wellenförmige Kontur aufweist, bei der der Durchmesser der Wellenberge maximal dem Schaftdurchmesser entspricht.

Der erfindungsgemäße Holznagel hat aufgrund seiner wellenförmigen, innerhalb der Kontur des Schaftes liegenden Ausbildung sehr hohe Auszugswerte, wobei beim Eintreiben des Holznagels selbst und die umgehende Holzmatrix kaum beschädigt wird.

Der erfindungsgemäße Holznagel kann mit einer wellenförmigen Kontur, die asymmetrisch oder auch symmetrisch ist, ausgebildet sein.

Bei einer Ausführungsform der Erfindung ist der Holznagel dadurch gekennzeichnet, dass die wellenförmige Kontur im Übergang zum sich verjüngenden Bereich den maximalen Durchmesser aufweist.

Auch ist es möglich, dass beim Holznagel die wellenförmige Kontur im Übergang zum sich verjüngenden Bereich dem minimalen Durchmesser aufweist.

Der erfindungsgemäße Holznagel, mit einer zumindest partiell wellenförmigen Kontur kann mit unterschiedlich ausgebildeten, sich verjüngenden Bereichen versehen sein. So ist es denkbar, dass dieser sich verjüngende Bereich ein konischen Abschnitt in Verbindung mit einer Nagelspitze darstellt oder dass der sich verjüngende Bereich als ballistisch geformte Spitze ausgebildet ist.

Im Zusammenhang mit der ballistischen Spitze ist es bei einem weiteren Ausführungsbeispiel denkbar, dass der freie Endbereich abgerundet gestaltet ist.

Grundsätzlich ist es auch denkbar, dass der erfindungsgemäße Holznagel einen Kopf aufweist, wobei dieser bei einer weiteren Ausführungsform zwischen Kopf und Schaft einen Bereich aufweist, der eine zum Schaft hin konische Querschnittsverringerung aufweist.

Weitere Vorteile der Erfindung ergeben sich aus der nachfolgenden Beschreibung diverser Ausführungsbeispiele.

Es zeigen:

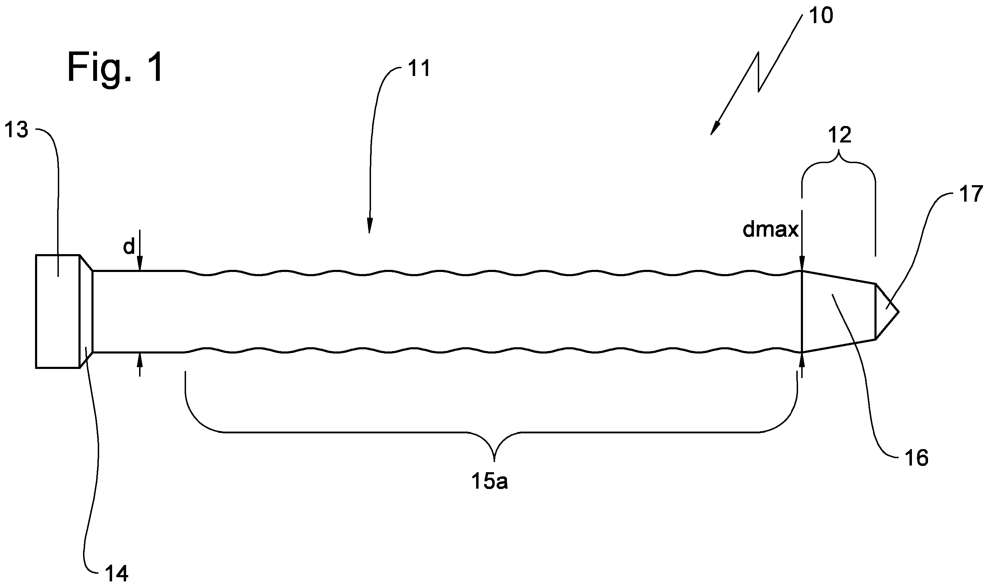

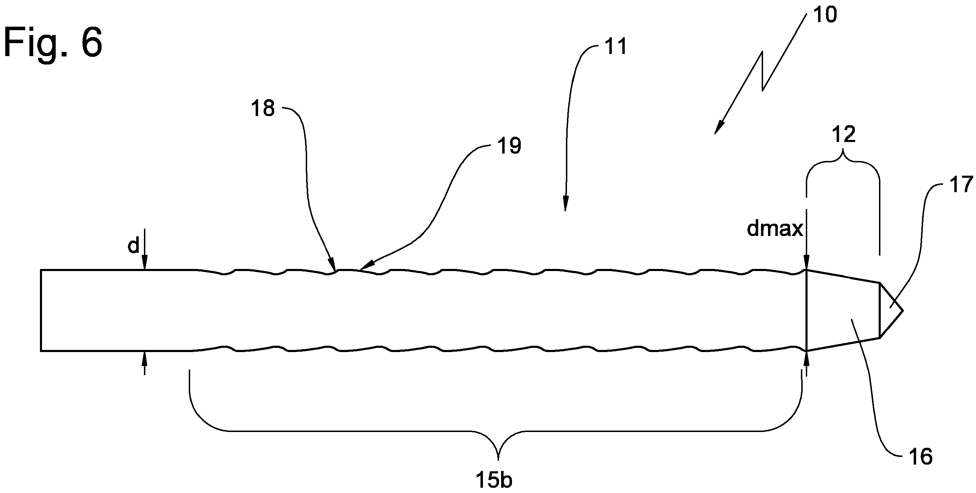

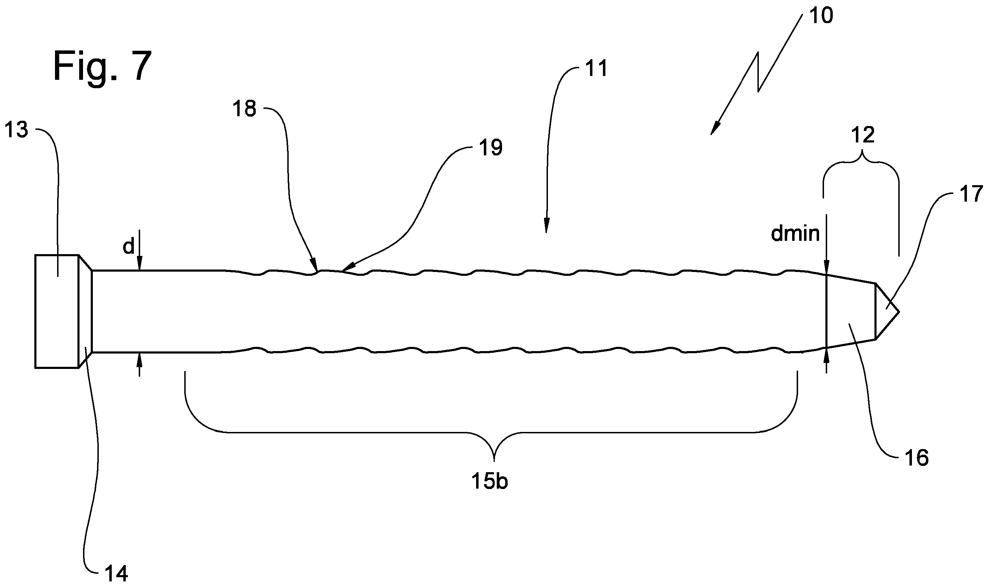

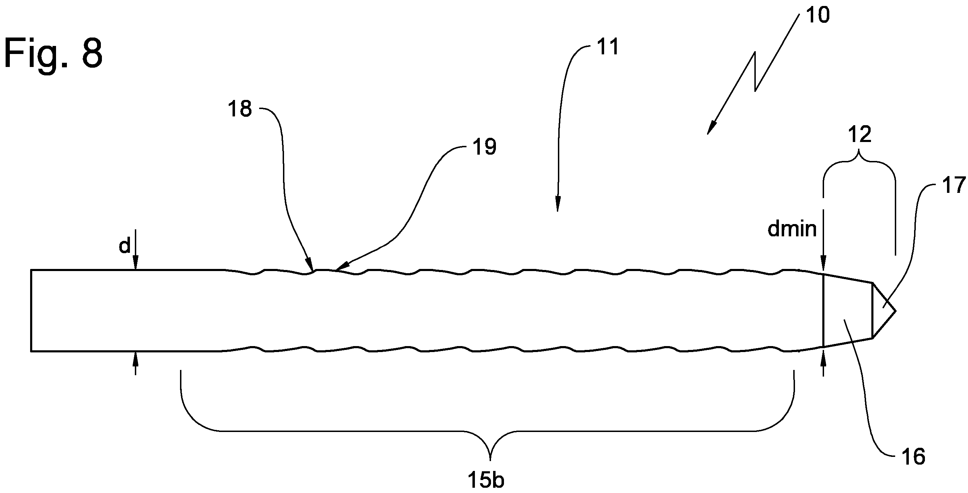

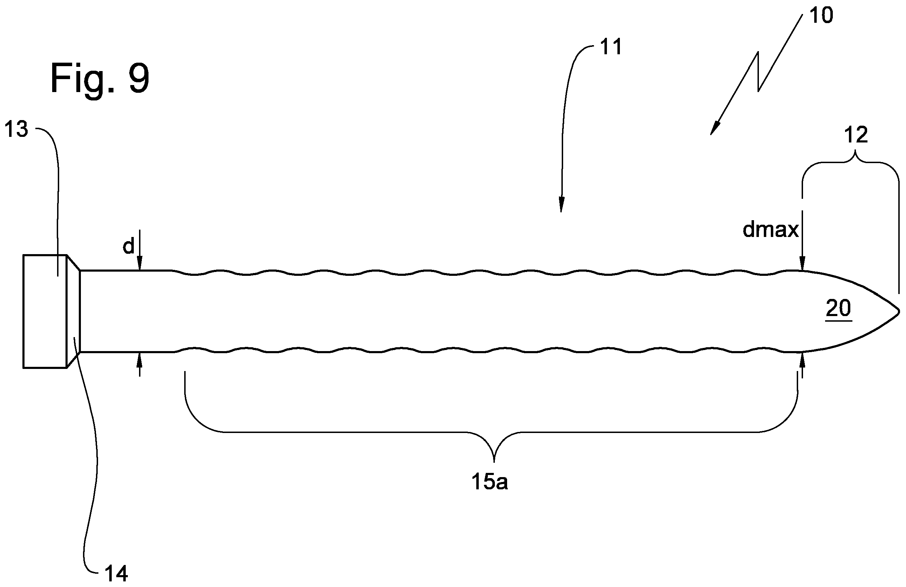

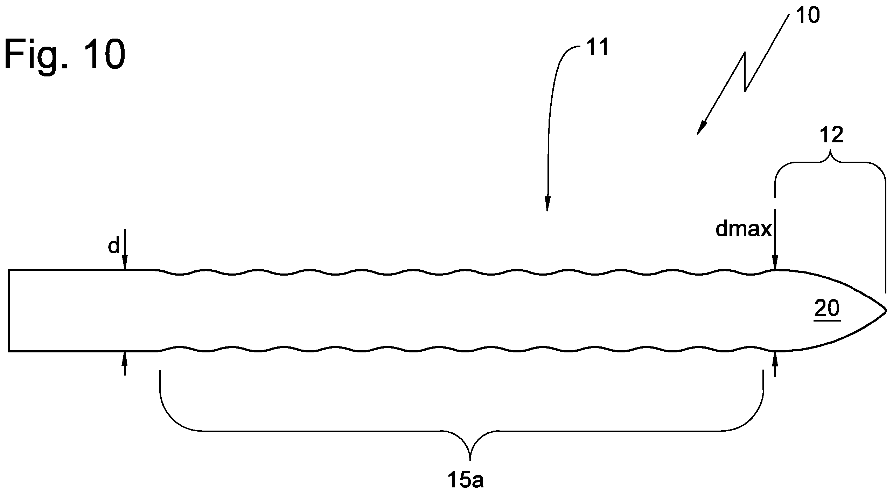

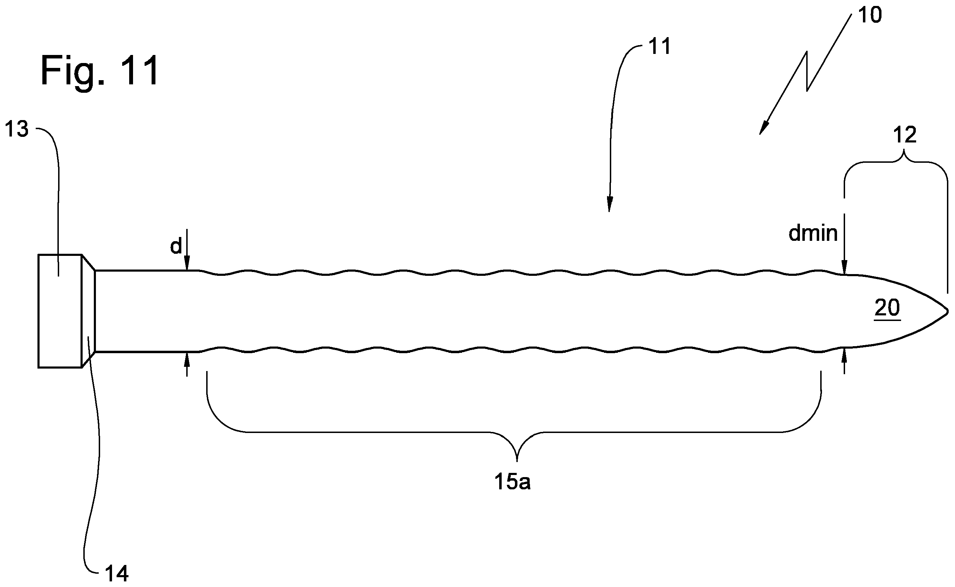

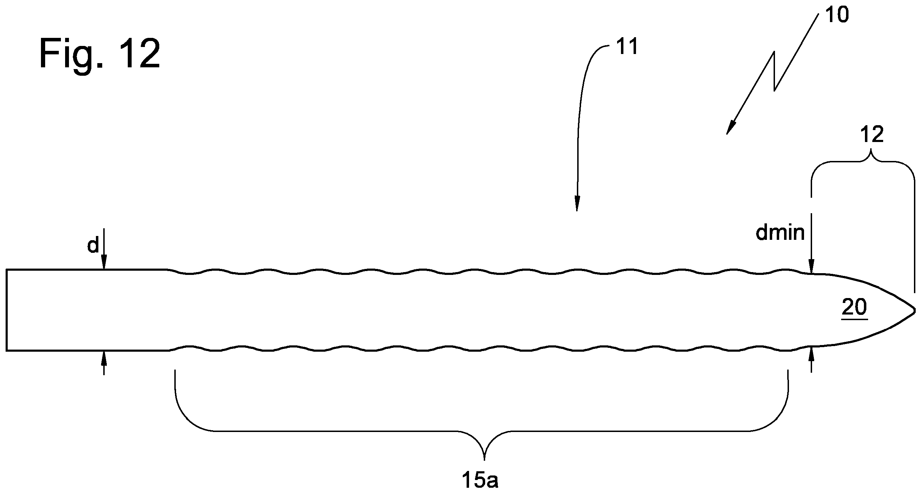

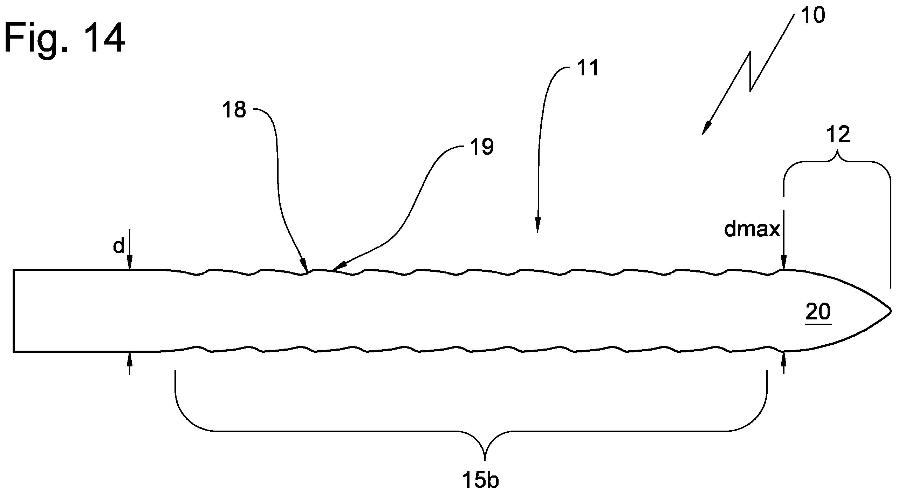

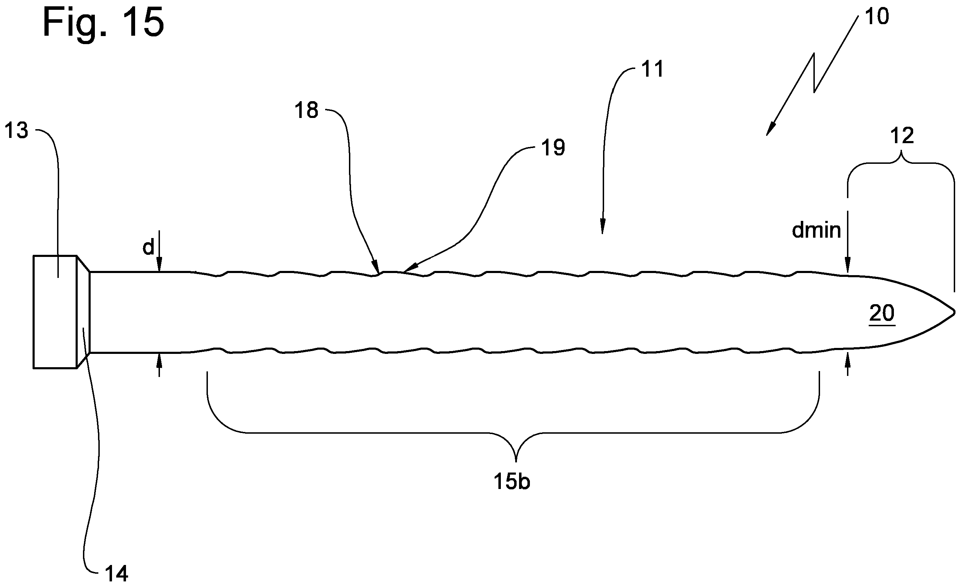

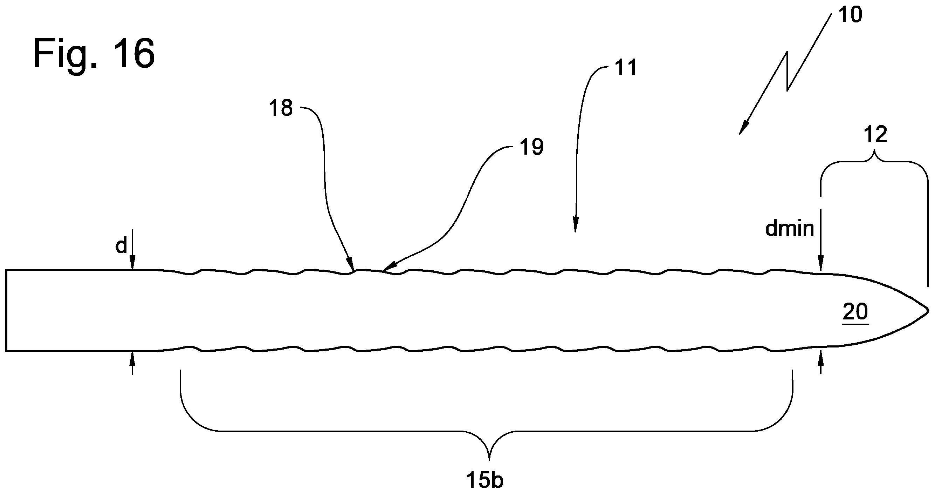

Figuren 1 bis 16 diverse erfindungsgemäße Ausgestaltungen eines Holznagels.

In den Zeichnungen ist ein Holznagel insgesamt mit der Bezugsziffer 10 bezeichnet. Der Holznagel 10 weist einen Schaft 11 auf, der mit einem sich verjüngenden Bereich 12 und optional mit einem Kopf 13 versehen ist. Zwischen dem Kopf 13 und dem Schaft 11 ist ein Bereich 14 mit einer konischen ausgeformten Querschnittsverringerung 14 vorhanden.

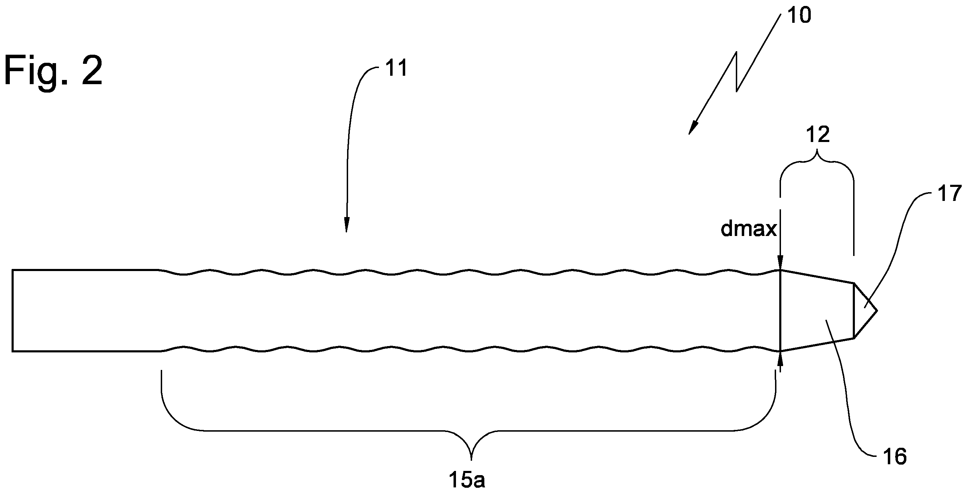

In den Figuren 1 und 2 ist eine erste Ausführungsform des Holznagels 10 mit Kopf 13 (Figur 1) und ohne (Figur 2) dargestellt.

Übereinstimmend weist der jeweilige Schaft 11 eine symmetrische, wellenförmige Kontur 15 auf, deren maximaler Durchmesser dmax nicht größer ist als der Durchmesser d des Schaftes 11.

Zum sich verjüngenden Bereich 12 weisend, endet die wellenförmige Kontur 15a mit dem maximalen Durchmesser dw, wobei dann sich ein konisch zulaufender Bereich 16 und eine Spitze 17 anschließen, die den sich verjüngenden Bereich 12 ausbilden.

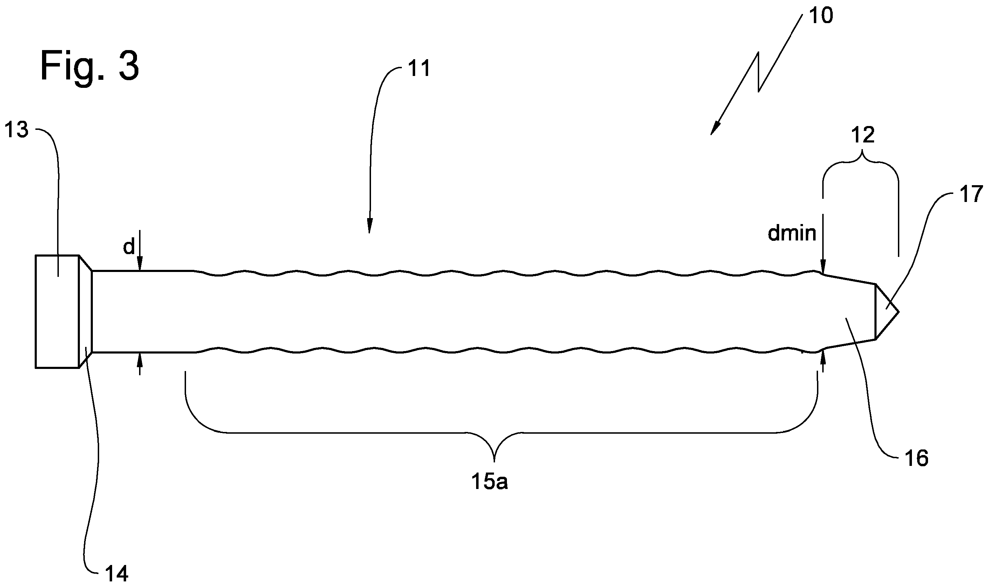

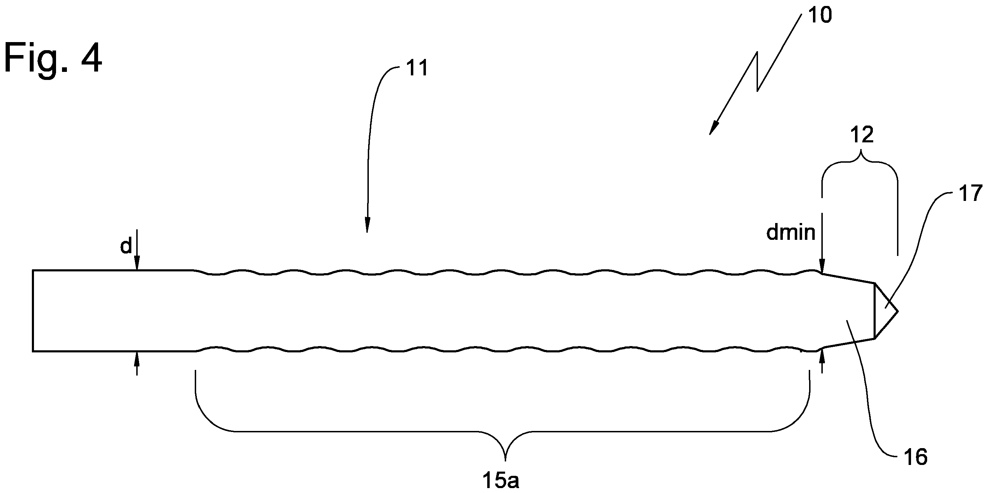

In den Figuren 3 und 4 ist eine weitere Ausführungsform mit und ohne Kopf 13 dargestellt, welche sich lediglich in einem konstruktiven Merkmal von der zuerst beschriebenen Ausführungsform unterscheidet.

Bei den Ausführungsformen der Figuren 3 und 4 endet nämlich die symmetrische, wellenförmige Kontur 15a im Durchmesser dmin, wobei sich dann der konisch zulaufende Bereich 16 und die Spitze 17 anschließen, die den sich verjüngenden Bereich 12 ausbilden.

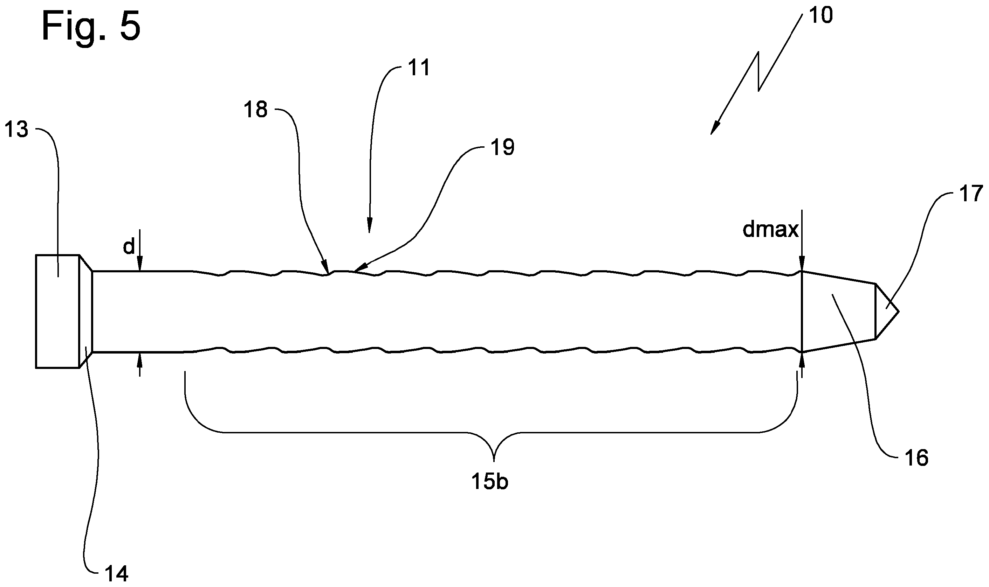

Die Ausführungsform gemäß der Figuren 5 bis 8 zeigen jeweils einen Holznagel 10, der nicht gemäß der Figuren 1 bis 4 eine symmetrische wellenförmige Kontur 15a, sondern eine asymmetrische wellenförmige Kontur 15b aufweist. Hierbei wird die wellenförmige Kontur 15b jeweils durch einen steilen Anstieg 18 und einen lang gestreckten Abstieg 19 gestaltet, die sich vielfach wiederholen.

Die Figuren 5 und 6 zeigen jeweils einen Holznagel 10, bei dem der sich verjüngende Bereich 12 mit dem Durchmesser dmax beginnt, während in den Figuren 7 und 8 der sich verjüngende Bereich 12 mit dmin startet.

Die Figuren 9 bis 12 zeigen Ausführungsformen des Holznagels 10 mit einem als ballistische Spitze 20 ausgebildeten sich verjüngenden Bereich 12 mit und ohne Kopf 13, wobei sich der Ausgangspunkt der ballistischen Spitze 20 einmal im höchsten Punkt dmax der symmetrisch wellenförmigen Kontur 15a befindet und einmal im tiefsten Punkt dmin.

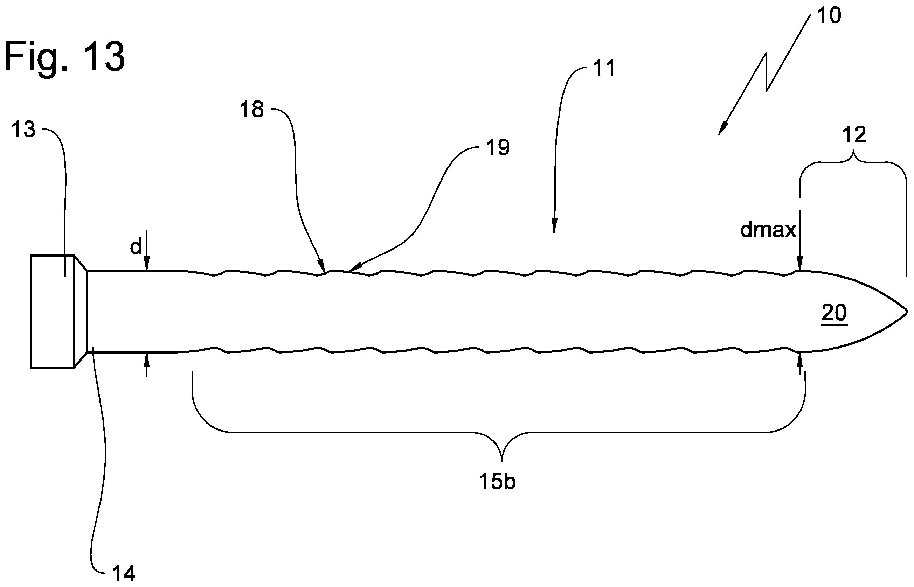

Letztlich zeigen die Figuren 13 bis 16 Ausführungsformen eines Holznagels 10 mit asymmetrisch wellenförmiger Kontur 15 und einer ballistischen Spitze 20 mit und ohne Kopf 13, wobei der sich verjüngende Bereich 12 entweder mit Punkt dmax oder mit Punkt dmin beginnt.

### Bezugszeichenliste

- 10: Holznagel
- 11: Schaft
- 12: sich verjüngende Bereich
- 13: Kopf
- 14: konische Querschnittsverringerung
- 15a: wellenförmige, symmetrische Kontur
- 15b: wellenförmige, asymmetrische Kontur
- 16: konisch zulaufende Bereich
- 17: Nagelrundspitze
- 18: steiler Anstieg
- 19: gestreckter Abstieg
- 20: Ballistische Spitze

- dmax: maximaler Durchmesser von 15
- dmin: minimaler Durchmesser von 15

## Patentansprüche

1. Holznagel (10), bestehend aus einem Schaft (11) und einem wenigstens an einem Ende angeordneten, sich verjüngenden Bereich (12), wobei der Durchmesser (d) des Schaftes (11) in Längsrichtung sich wiederholende Durchmesserveränderungen aufweist, **dadurch gekennzeichnet, dass** der Schaft (11) zumindest partiell eine wellenförmige Kontur (15a/15b) aufweist, bei der der Durchmesser (dmax) maximal dem Schaftdurchmesser (d) entspricht.

2. Holznagel nach Anspruch 1, **dadurch gekennzeichnet, dass** die wellenförmige Struktur (15b) asymmetrisch ausgebildet ist.

3. Holznagel nach Anspruch 1, **dadurch gekennzeichnet, dass** die wellenförmige Kontur (15a) symmetrisch ausgebildet ist.

4. Holznagel nach Anspruch 1 oder 2, **dadurch gekennzeichnet, dass** die wellenförmige Kontur (15a/15b) im Übergang zum sich verjüngenden Bereich (12) den maximalen Durchmesser (dmax) aufweist.

5. Holznagel nach Anspruch 1 oder 2, **dadurch gekennzeichnet, dass** die wellenförmige Kontur (15a/15b) im Übergang zum sich verjüngenden Bereich (12) den minimalen Durchmesser (dmin) aufweist.

6. Holznagel nach einem der vorangehenden Ansprüche, **dadurch gekennzeichnet, dass** der sich verjüngende Bereich (12) einen konisch zulaufenden Bereich (16) und eine Nagelrundspitze (17) aufweist.

7. Holznagel nach einem der vorangehenden Ansprüche, **dadurch gekennzeichnet, dass** der sich verjüngende Bereich (12) eine ballistische Spitze (20) aufweist.

8. Holznagel nach Anspruch 7, **dadurch gekennzeichnet, dass** die ballistische Spitze (20) mit einem abgerundeten freien Endbereich ausgebildet ist.

9. Holznagel nach einem der vorangehenden Ansprüche, **dadurch gekennzeichnet, dass** der Holznagel (12) ein Kopf (13) aufweist.

10. Holznagel nach Anspruch 9, **dadurch gekennzeichnet, dass** zwischen dem Kopf (13) und dem Schaft (11) ein Bereich ausgebildet ist, der eine zum Schaft (11) hin konische Querschnittsverringerung (14) aufweist.

## Claims

1. Wooden nail (10) consisting of a shaft (11) and a tapering area (12) disposed on at least one end, wherein the diameter (d) of the shaft (11) in the longitudinal direction has repeated changes in diameter, **characterised in that** the shaft (11) at least partially has a wavy outline (15a/15b), for which the maximum diameter (dmax) corresponds to the shaft diameter (d).

2. Wooden nail according to claim 1, **characterised in that** the wavy structure (15b) is designed asymmetrically.

3. Wooden nail according to claim 1, characterised the wavy outline (15a) is designed symmetrically.

4. Wooden nail according to claim 1 or 2, **characterised in that** the wavy outline (15a/15b) has its maximum diameter (dmax) at the transition into the tapering area (12).

5. Wooden nail according to claim 1 or 2, **characterised in that** the wavy outline (15a/15b) has its minimum diameter (dmin) at the transition into the tapering area (12).

6. Wooden nail according to one of the preceding claims, **characterised in that** the tapering area (12) has a conically pointed area (16) and a nail round tip (17).

7. Wooden nail according to one of the preceding claims, **characterised in that** the tapering area (12) has a ballistic tip (20).

8. Wooden nail according to claim 7, **characterised in that** the ballistic tip (20) is designed having a rounded free end area.

9. Wooden nail according to one of the preceding claims, **characterised in that** the wooden nail (12) has a head (13).

10. Wooden nail according to claim 9, **characterised in that** an area, which has a conical cross-sectional reduction (14) towards the shaft (11), is formed between the head (13) and the shaft (11).

## Revendications

1. Clou en bois (10) composé d'une tige (11) et d'une partie effilée (12) disposée au moins à une extrémité, le diamètre (d) de la tige (11) présentant des variations de diamètre qui se répètent dans le sens longitudinal, **caractérisé en ce que** la tige (11) présente, au moins partiellement, un contour ondulé (15a/15b) dans lequel le diamètre (dmax) correspond au maximum au diamètre de la tige (d).

2. Clou en bois selon la revendication 1, **caractérisé en ce que** la structure ondulée (15b) est de forme asymétrique.

3. Clou en bois selon la revendication 1, **caractérisé en ce que** le contour ondulé (15a) est de forme symétrique.

4. Clou en bois selon la revendication 1 ou 2, **caractérisé en ce que** le contour ondulé (15a/15b) présente le diamètre maximal (dmax) au niveau de la transition vers la zone effilée (12).

5. Clou en bois selon la revendication 1 ou 2, **caractérisé en ce que** le contour ondulé (15a/15b) présente le diamètre minimal (dmin) au niveau de la transition vers la zone effilée (12).

6. Clou en bois selon l'une des revendications précédentes, **caractérisé en ce que** la partie effilée (12) présente une partie conique (16) et une pointe arrondie (17).

7. Clou en bois selon l'une des revendications précédentes, **caractérisé en ce que** la partie effilée (12) présente une pointe balistique (20).

8. Clou en bois selon la revendication 7, **caractérisé en ce que** la pointe balistique (20) est formée avec une zone d'extrémité libre arrondie.

9. Clou en bois selon l'une des revendications précédentes, **caractérisé en ce que** le clou en bois (12) comporte une tête (13).

10. Clou en bois selon la revendication 9, **caractérisé en ce qu'**une partie est formée entre la tête (13) et la tige (11), laquelle partie présente un rétrécissement de section transversale (14) conique vers la tige (11).
